# EUROPÄISCHE PATENTANMELDUNG

(11) **EP 0 637 720 A1**
(43) Veröffentlichungstag der Anmeldung: **08.02.1995**
(21) Anmeldenummer: 94111429.0
(22) Anmeldetag: 21.07.1994
(51) Int. Cl.: F24D 3/14

(54) **Fussbodenheizung**

(30) Priorität: 06.08.1993 DE 4326495
(71) Anmelder: THYSSEN POLYMER GMBH, D-81671 München (DE)
(72) Erfinder: Fiedler, Wilfried, D-81737 München (DE); Neueder, Ludwig, D-94327 Bogen (DE); Wöhrl, Helmut, D-94327 Bogen (DE); Fellinger, Herbert, D-94522 Wallersdorf (DE)

(57) **Zusammenfassung**

Die Erfindung bezieht sich auf eine Fußbodenheizung aus vorgefertigten Bauelementen, die im wesentlichen aus zwei spiegelbildlich aufeinandergelegten und miteinander verrasteten Platten (1), vorzugsweise tiefgezogenen Kunststoffplatten besteht, zwischen denen Wärmetauscherrohre (9) verlegt und verriegelt sind und Luft durch den Zwischenraum der beiden Platten über die Wärmetauscherrohre (9) in den zu temperierenden Raum zum Zwecke einer raschen Reaktion auf einen geänderten Wärmebedarf bzw. Temperaturänderungen in diesem Raum geführt ist.

## Beschreibung

Die Erfindung betrifft eine Fußbodenheizung aus vorgefertigten Bauelementen. z. B. tiefgezogenen Kunststoffplatten, die auf ihrer Oberfläche mit in einem bestimmten Raster angeordnete, mit nach innen gekehlten Flanken versehene, etwa pilzförmig ausgebildete beispielsweise mittels Stegen oder dergl. verbundene Erhebungen aufweisen, zwischen denen Wärmetauscherrohre verlegt sind.

Derartige Fußbodenheizungen sind an sich bekannt. Solche, aus Bauelementen zusammengesetzte Fußbodenheizungen sind u.a. aus der DE-A 1929529 bekannt. Dabei sind die Wärmetauscherrohre zwischen einer Deckplatte aus wärmeleitendem Baustoff und der mit nach oben vorstehenden Nocken versehenen Grundplatte angeordnet und noch zusätzlich eine wärmeleitende Zwischenschicht vorgesehen. Eine weitere Fußbodenheizung ist aus der EP 0060547 bekannt geworeden. Gemäß dieser Druckschrift besteht das Oberteil einer solchen Systemplatte aus einer tiefgezogenen Kunststoffplatte bei der das Oberteil derselben mit Erhebungen, die durch Stege miteinander verbunden sind, besteht, wobei diese ein netzförmiges Stegraster mit Knotenpunkten bilden und die Stege als punkt- bzw. linienförmige Auflage für die Wärmetauscherrohre dienen. Ferner sind Bauplatten für Fußbodenheizungen bekanntgeworden, die, wie in der DE-U 1986165 beschrieben. Kunststoffhartschaum verwenden. Schließlich sind auch Halte- und Umlenknocken für die Wärmetauscherrohre z.B. aus der DE-A 2840149 bekannt geworden.

Die Wärmetauscherrohre der bekannten Fußbodenheizungen werden dabei in den Estrich des Fußbodens eingebettet, folglich ist, aus Gründen der Wärmedämmung die Reaktion des Systems auf Temperaturänderungen im zu temperierenden Raum relativ träge.

Hier setzt die Erfindung ein. Die Erfindung wie sie in den Ansprüchen beschrieben ist, löst die Aufgabe, eine Fußbodenheizung mit rascher Ansprechzeit und einen hohen Wirkungsgrad zu besitzen.

Die mit der Erfindung erzielten Vorteile sind insbesondere darin zu sehen, daß die Kombination von im Fußboden verlegten Wärmetauscherrohren die ihre Wärme an Luft abgeben eine auf Temperaturänderungen im zu temperierenden Raum schnell reagierende Heizung und/oder Kühlung, ggf. auch entstaubt und klimatisiert ermöglicht. Ein weiterer Vorteil liegt in der wirtschaftlichen Herstellung und Verlegung der Systemplatten und Wärmetauscherrohre, die jeden darauf zu verlegenden Fußboden zulassen.

Die Erfindung ist nachstehend anhand eines in den Abbildungen dargestellten Ausführungsbeispieles näher erläutert.

Es zeigt:
- Fig. 1: eine Draufsicht auf eine Systemplatte,
- Fig. 2: einen Schnitt durch eine verlegte Fußbodenheizung,
- Fig. 3: einen Schnitt durch eine Systemplatte,
- Fig. 4: eine Explosionsdarstellung der Fig. 3 und
- Fig. 5: eine Ausführungsvariante Fig. 2.

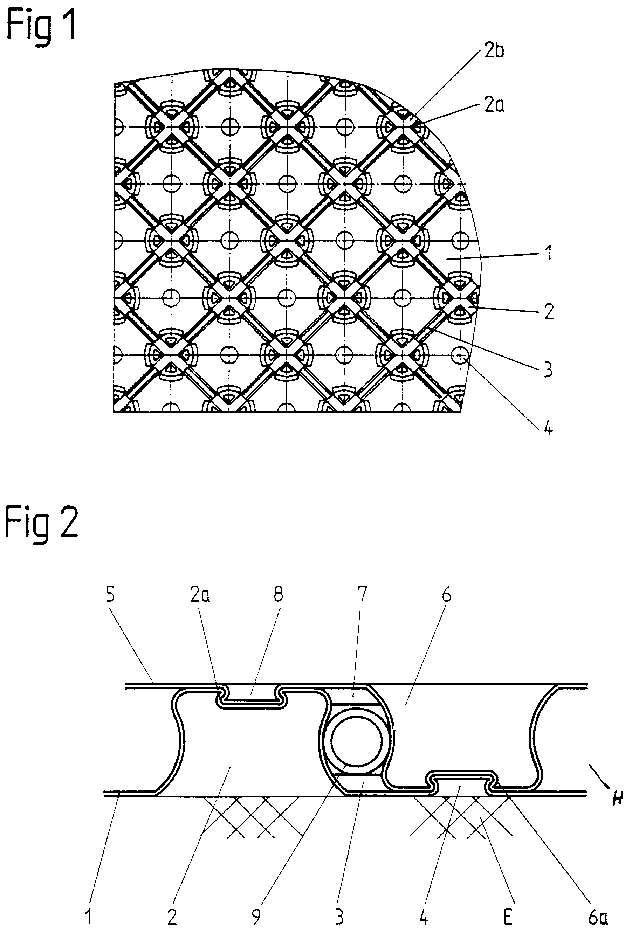

Die in der Fig. 1 dargestellte Fußbodenheizung be steht im wesentlichen aus einer Systemplatte 1, die zwei unterschiedliche Erhebungen 2,4 in rastermäßiger Anordnung aufweist, wobei die etwa pilzförmigen Erhebungen 2 nach innen gekehlte Flanken für die Anlage der Wärmetauscherrohre 9 und oben eine hinterschnittene Vertiefung 2a besitzen. Die Vertiefung 2a ist mit dem Rand der Erhebung H mittels einer oder mehrerer Rillen 2b zum Zwecke des Federns unter Belastung versehen. Anstatt der Vertiefung 2a kann beispielsweise auch eine muldenförmige Vertiefung vorgesehen sein. Die Erhebungen 2 können miteinander durch Stege 3 für die Auflage der Wärmetauscherrohre 9 und zur Erhöhunmg der Stabilität der Systemplatte 1 selbst verbunden sein. Zwischen den Erhebungen 2 sind z.B. weitere, etwa knopfförmige Erhebungen 4 vorgesehen.

Werden zwei solche Systemplatten, wie in den Fig. 2 bis 4 dargestellt und mit 1 und 5 bezeichnet, spiegelbildlich aufeinandergelegt, so ergibt sich zwischen beiden ein Hohlraum H in dem die Wärmetauscherrohre 9 verlegt sind. Dabei rasten die knopfartigen Erhebungen 4,8 der jeweiligen Systemplatten 1,5 in die Vertiefungen 2a,6a der gegenüberliegenden Erhebungen 2,6 ein, wodurch ein fester Verbund beider Systemplatten erzielt wird. Die Systemplatte 1 ist auf dem Estrich bzw. dem Boden E aufgelegt und muß nicht besonders mit diesem verbunden sein.

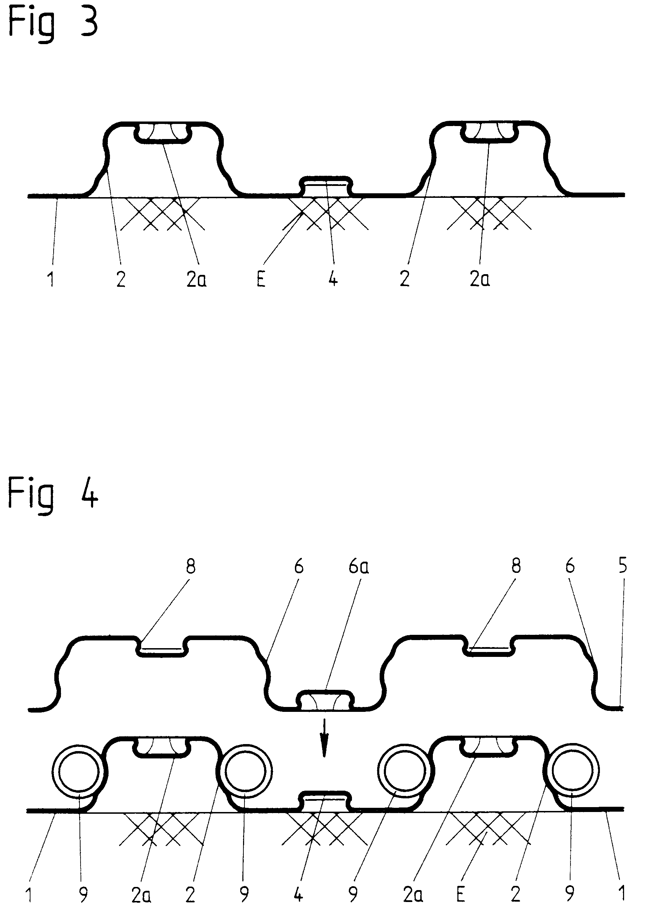

Die Fig. 3 und 4 zeigen Ausführungsvarianten der Fig. 1 und 2, wobei die in Fig. 1 und 2 dargestellten, die einzelnen Erhebungen 2,6 verbindenden Stege 3,7 nicht vorhanden sind.

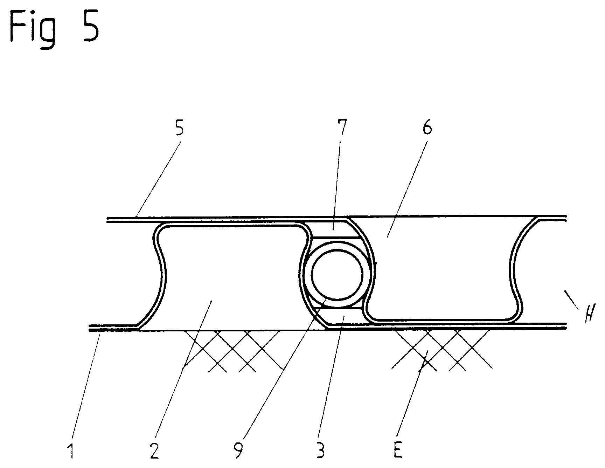

Fig. 5 zeigt eine Ausführungsvariante ohne knopfartige Erhebungen 4,6 und folglich ohne die Vertiefungen in den pilzförmigen Erhebungen 2,6. Die Oberfläche der Erhebungen 2,6 ist dabei etwas muldenförmig ausgebildet, um die erforderliche Elastizität der Erhebungen zu gewährleisten, wenn die beiden Systemplatten aufeinandergelegt undgedrückt werden. Die Verbindung wird erreicht, indem die Erhebungen 2,6 der beiden Platten über die Wärmetauscherrohre 9 geschnappt werden und diese sich an die nach innen gekehlten Flanken der Erhebungen 2,6 anschmiegen. Beim Aufdrücken der beiden Systemplatten über die Wärmetauscherrohre geben die Erhebungen 2,6 elastisch nach und geben, zusammen mit den Wärmetauscherrohren 9 einen fest haltenden Verbund.

Falls die beiden Systemplatten, beispielsweise im Reparaturfall oder aus sonstigen Gründen voneinander getrennt werden müssen, ist dies ohne weiteres durch Abheben möglich. Eine Zerstörung der einzelnen Bestandteile ist dabei mit Sicherheit vermieden.

Der zwischen den beiden Systemplatten verbleibende Hohlraum H birgt mehrere Vorteile für ein Fußbodenzheizungssystem, das ggfl. auch als Deckenheizungssystem etc. eingesetzt werden kann. Beispielsweise ist er als wärmedämmendes Luftpolster und zusätzlicher Puffer geeignet. Es kann auch Luft durch diesen Hohlraum H geleitet werden, wodurch die Vorteile einer Klimatisierung des zu temperierenden Raumes, ein rascheres Ansprechen der Heizung auf Temperaturänderungen usw. gegeben sind. Soll Luft durch den Hohlraum H in den zu temperierenden Raum geleitet werden, so kann ein vorgeschaltetes Staubfilter, ein Luftbefeuchter etc. weitere Vorteile bringen.

## Patentansprüche

1. Fußbodenheizung aus vorgefertigten Bauelementen, wie Systemplatten z.B. aus tiefgezogenen Kunststoffplatten, die auf der Oberfläche in einem bestimmten Raster angeordnete, mit nach innen gekehlten Flanken versehene, etwa pilzförmige, beispielsweise durch Stege verbundene Erhebungen aufweisen, zwischen denen Wärmetauscherrohre angeordnet sind, die an den nach innen gekehlten Flanken der Erhebungen anliegen, deren Höhe den Außendurchmesser der Wärmetauscherrohre übersteigt **dadurch gekennzeichnet**, daß eine Bodenplatte (1) und eine Deckplatte (5), zwischen sich einen Hohlraum bildend, dessen Volumen größer ist als die darin verlegten Wärmetauscherrohre (9) beanspruchen, spiegelbildlich aufeinandergelegt und miteinander lösbar verbunden sind.

2. Fußbodenheizung nach Anspruch 1, **dadurch gekennzeichnet**, daß die Bodenplatte (1) und die Deckplatte (5) sowohl pilzförmige federnde Erhebungen (2) als auch knopfförmige Erhebungen (8) aufweisen und spiegelbildlich aufeinander liegend derart verrastet sind, daß jeweils eine knopfförmige Erhebung (4,8) in die Hinterschneidung (2a,6a) der pilzförmigen Erhebung (2,6) der spiegelbildlich aufliegenden anderen Platte (1,5) eingreift und die Wärmetauscherrohre (9) zwischen zwei Erhebungen (2,6) an deren nach innen gekehlten Flanken so festgelegt sind, daß sie die beiden Platten (1,5) zusätzlich miteinander verrasten.

3. Fußbodenheizung nach Anspruch 1 und 2, **dadurch gekennzeichnet**, daß in den Bereichen der Umlenkung der Wärmetauscherrohre (9) keine Erhebungen (8) vorgesehen sind.

4. Fußbodenheizung nach Anspruch 1 bis 3, **dadurch gekennzeichnet**, daß die Vertiefungen (2a,4a) durch mindestens eine Rille mit dem Rand der Erhebung (2,4) in Verbindung stehen.

5. Fußbodenheizung nach Anspruch 1 und einen der folgenden, **dadurch gekennzeichnet**, daß für in den Zwischenraum der Boden- und Deckplatte (21,5) eingeleitete Luft eine Entstaubungseinrichtung vorgesehen ist.

6. Fußbodenheizung nach Anspruch 1 und einen der folgenden, **dadurch gekennzeichnet**, daß eine Klimavorrichtung für den Raum zwischen der Boden- und Deckplatte (1,5) vorgesehen ist.

7. Fußbodenheizung nach Anspruch 1, **dadurch gekennzeichnet**, daß die beiden Platten (1,5) durch Einrasten der knopfförmigen Erhebungen (4,8) in die Hinterschneidungen (2a,6a) der Erhebungen (2,6) verbunden sind.

8. Fußbodenheizung nach Anspruch 1, **dadurch gekennzeichnet**, daß die beiden Platten (1,5) durch Klemmwirkung der zwischen den nach innen gekehlten Flanken zweier benachbarter Erhebungen (2,6) angeordneten Wärmetauscherrohre (9) verbunden sind.

9. Fußbodenheizung nach Anspruch 1 und einen der folgenden, **dadurch gekennzeichnet**, daß die Erhebungen (2,6) auf ihrer Oberseite nach innen gewölbt sind.

10. Fußbodenheizung nach Anspruch 1 und einen der folgenden, **dadurch gekennzeichnet**, daß die Wärmetauscherrohre (9) außer an den Flanken (2a,6a) auch an Stegen (3,7) der Platten (1,5) anliegen.

11. Fußbodenheizung nach Anspruch 1 und einen der folgenden, **dadurch gekennzeichnet**, daß die Bodenplatte (1) und die Deckplatte (5) identisch sind.
